# EUROPEAN PATENT APPLICATION

(11) **EP 4 838 595 A1**
(43) Date of publication of application: **11.11.2026**
(21) Application number: 24939317.4
(22) Date of filing: 19.07.2024
(51) Int. Cl.: H01M 10/04, H01M 10/0525

(54) **BATTERY CELL HOT-PRESSING DEVICE AND BATTERY PRODUCTION APPARATUS**

(30) Priority: 21.05.2024 CN 202421105537 U
(71) Applicant: Contemporary Amperex Technology Co., Limited, Ningde, Fujian 352100 (CN)
(72) Inventor: YANG, Mukai, Ningde, Fujian 352100 (CN); ZHANG, Cong, Ningde, Fujian 352100 (CN); PAN, Wensheng, Ningde, Fujian 352100 (CN); FAN, Xiang, Ningde, Fujian 352100 (CN); ZHANG, Zhiguo, Ningde, Fujian 352100 (CN); WU, Kai, Ningde, Fujian 352100 (CN)
(74) Representative: Kraus & Lederer PartGmbB
(86) International application number: PCT/CN2024/106450
(87) International publication number: WO 2025/241297

(57) **Abstract**

The present application relates to a battery cell hot-pressing device and a battery production apparatus. The battery cell hot-pressing device comprises a first hot-pressing assembly which comprises a first pressing plate and second pressing plates adjacent to the first pressing plate, wherein the first pressing plate and the second pressing plates are aligned to form a first hot-pressing surface so as to press and cover at least part of a first surface of a battery cell, and the first pressing plate and the second pressing plates can alternately ascend and descend relative to a first direction; and a second hot-pressing assembly, arranged opposite to the first hot-pressing assembly in the first direction and comprising a third pressing plate and fourth pressing plates adjacent to the third pressing plate, wherein the third pressing plate and the fourth pressing plates are aligned to form a second hot-pressing surface so as to press and cove at least part of a second surface of the battery cell, and the third pressing plate can ascend and descend in the first direction relative to the fourth pressing plates. The battery cell hot-pressing device of the present application can effectively improve the efficiency of feeding a battery cell to a hot-pressing station for hot-pressing shaping, thereby improving the production efficiency of battery cells.

## Description

### CROSS-REFERENCE TO RELATED APPLICATIONS

The present application refers to Chinese Patent Application No. 202421105537.X, filed on May 21, 2024 and entitled "CELL HOT-PRESSING APPARATUS AND BATTERY PRODUCTION DEVICE", which is incorporated herein by reference in its entirety.

### TECHNICAL FIELD

The present application relates to the technical field of battery production, and in particular, to a cell hot-pressing apparatus and a battery production device.

### BACKGROUND

In a battery production process, a positive electrode sheet, a negative electrode sheet, and a separator are processed by winding or stacking to form a cell, and then the cell needs to be hot-pressed and shaped to meet quality requirements of the cell.

In the related art, a hot-pressing apparatus has structural defects. During the process of feeding the cell to a hot-pressing station on the hot-pressing apparatus, the cell is prone to structural interference with the hot-pressing plates of the hot-pressing apparatus, causing difficulties in cell feeding and affecting the hot-pressing efficiency of the cell.

### SUMMARY

The present application aims to solve at least one of the technical problems existing in some situations. To this end, the present application provides a cell hot-pressing apparatus and a battery production device, which can improve the efficiency of feeding a cell to a hot-pressing station for hot-pressing and shaping, thereby improving the production efficiency of the cell.

According to a first aspect, the present application provides a cell hot-pressing apparatus, including:
a first hot-pressing assembly, including a first pressing plate and a second pressing plate disposed adjacent to the first pressing plate, where the first pressing plate and the second pressing plate are joined to form a first hot-pressing surface for pressing against and covering at least a portion of a first surface of a cell, and the first pressing plate and the second pressing plate are capable of alternately moving up and down along a first direction; and
a second hot-pressing assembly, disposed opposite to the first hot-pressing assembly along the first direction, and including a third pressing plate and a fourth pressing plate disposed adjacent to the third pressing plate, where the third pressing plate and the fourth pressing plate are joined to form a second hot-pressing surface for pressing against and covering at least a portion of a second surface of the cell, and the third pressing plate is capable of moving up and down along the first direction relative to the fourth pressing plate.

The cell hot-pressing apparatus according to the first aspect of the present application has at least the following beneficial effects:

The cell hot-pressing apparatus of the present application, by arranging the first pressing plate and the second pressing plate on the first hot-pressing assembly as separate components and enabling the first pressing plate and the second pressing plate to alternately move up and down along the first direction, and at the same time, by arranging the third pressing plate and the fourth pressing plate on the second hot-pressing assembly as separate components and enabling the third pressing plate to move up and down along the first direction relative to the fourth pressing plate, can enable the corresponding pressing plates to effectively avoid motion interference with a cell handling member during the cell feeding process, allowing the cell to be smoothly fed to a hot-pressing station, effectively improving the efficiency of feeding the cell to the hot-pressing station for hot-pressing and shaping, thereby improving the production efficiency of the cell.

In some embodiments, two second pressing plates are provided, the two second pressing plates are respectively disposed on two opposite sides of the first pressing plate, and the first hot-pressing surface formed by joining the first pressing plate and the two second pressing plates covers the first surface of the cell.

With this arrangement, on the one hand, when the first pressing plate is individually pressed down to the cell relative to the second pressing plates on its two sides, motion interference with the handling member on the cell can be smoothly avoided, further improving the feeding efficiency of the cell. On the other hand, each part on the first surface of the cell can be hot-pressed and shaped, improving the uniformity of hot-pressing on the cell, thereby improving the hot-pressing efficiency of the cell.

In some embodiments, the first hot-pressing assembly further includes a first frame body, all the second pressing plates are connected to the first frame body to be driven by the first frame body to move up and down along the first direction, and the first pressing plate is also movably connected to the first frame body in an up-down manner.

With this arrangement, all the second pressing plates can be synchronously moved up and down with the first frame body, eliminating the need to configure separate driving members for each second pressing plate, saving material costs. In addition, the first frame body can serve as an installation support structure for the first pressing plate, facilitating independent up-down movements of the first pressing plate relative to the second pressing plate.

In some embodiments, the first hot-pressing assembly further includes a guide rail extending along the first direction, and the first frame body is slidably mounted on the guide rail.

With this arrangement, the first frame body can drive the first pressing plate and the second pressing plate carried thereon to move up and down in the first direction with improved linearity.

In some embodiments, two fourth pressing plates are provided, the two fourth pressing plates are respectively disposed on two opposite sides of the third pressing plate, and the second hot-pressing surface formed by joining the third pressing plate and the two fourth pressing plates covers the second surface of the cell.

With this arrangement, on the one hand, when the third pressing plate is individually pressed up to the cell relative to the fourth pressing plates on its two sides, motion interference with the handling member on the cell can be smoothly avoided, further improving the feeding efficiency of the cell. On the other hand, each part on the second surface of the cell can be hot-pressed and shaped, improving the uniformity of hot-pressing on the cell, thereby improving the hot-pressing efficiency of the cell.

In some embodiments, the second hot-pressing assembly further includes a second frame body, all the fourth pressing plates are fixedly disposed on the second frame body, and the third pressing plate is also movably connected to the second frame body in an up-down manner.

With this arrangement, the spatial layout and installation of the third pressing plate and the fourth pressing plate are facilitated. Moreover, the second frame body can serve as a bearing support structure for the entire first hot-pressing assembly and the cell, providing support for subsequent pressing and shaping of the cell.

In some embodiments, the cell hot-pressing apparatus further includes a first flexible film stretched between the first hot-pressing assembly and the cell along a second direction, the second direction intersects the first direction, and after the first pressing plate and the second pressing plate move down a preset distance relative to the first direction, at least a portion of the first flexible film is pressed against and covered on the first surface of the cell.

With this arrangement, by means of the protective effect of the smooth first flexible film on the first surface of the cell, the first hot-pressing surface formed by joining the first pressing plate and the second pressing plate does not directly contact the first surface of the cell, which can effectively reduce the probability of indentation occurring on the first surface of the cell. On the other hand, by means of the structural characteristics of the first flexible film, the probability of adhesion between the first surface of the cell and the first pressing plate and/or the second pressing plate after hot-pressing of the cell can be reduced. In this way, the hot-pressing quality and hot-pressing efficiency of the cell are improved.

In some embodiments, the cell hot-pressing apparatus further includes a first adjustment assembly, and the first adjustment assembly is configured to guide the first flexible film to move along a preset direction to adjust a contact position between the first flexible film and the first hot-pressing surface.

With this arrangement, the corresponding contact position between the first flexible film and the first hot-pressing surface is changed by guiding the first flexible film to move along the preset direction through the first adjustment assembly, which not only can prolong the service life of the first flexible film, but also can ensure that each cell receives effective protection from the first flexible film, reducing the probability of indentation occurring on the first surface of the cell and the probability of adhesion between the cell and the first hot-pressing surface, thereby improving the consistency of the hot-pressing effect on multiple cells.

In some embodiments, the first adjustment assembly includes a first unwinding roller, a first tensioning roller, and a first winding roller sequentially disposed along the second direction, two ends of the first flexible film are respectively connected to the first unwinding roller and the first winding roller, and the first flexible film is also wound around the first tensioning roller.

With this arrangement, when it is necessary to adjust the contact position between the first flexible film and the first hot-pressing surface, the first winding roller can be driven to rotate, causing the first winding roller to pull and wind the first flexible film along a rotation direction of the first winding roller, thereby changing the corresponding contact position between the first flexible film and the first hot-pressing surface, so as to achieve the effect of adjusting the contact position between the first flexible film and the first hot-pressing surface.

In some embodiments, the cell hot-pressing apparatus further includes a second flexible film stretched between the second hot-pressing assembly and the cell along the second direction, the second direction intersects the first direction, and after the first pressing plate and the second pressing plate move down a preset distance relative to the first direction, the cell is pressed between the first hot-pressing surface and the second hot-pressing surface, so that at least a portion of the second flexible film is pressed against and covered on the second surface of the cell.

With this arrangement, on the one hand, by means of the protective effect of the smooth second flexible film on the second surface of the cell, the second hot-pressing surface formed by joining the third pressing plate and the fourth pressing plate does not directly contact the second surface of the cell, which can effectively reduce the probability of indentation occurring on the second surface of the cell. On the other hand, by means of the structural characteristics of the second flexible film, the probability of adhesion between the second surface of the cell and the third pressing plate and/or the fourth pressing plate after hot-pressing of the cell can be reduced. In this way, the hot-pressing quality and hot-pressing efficiency of the cell are improved.

In some embodiments, the cell hot-pressing apparatus further includes a second adjustment assembly, and the second adjustment assembly is configured to guide the second flexible film to move along a preset direction to adjust a contact position between the second flexible film and the second hot-pressing surface.

With this arrangement, the corresponding contact position of the second flexible film with the second hot-pressing surface is changed by guiding the second flexible film to move along the preset direction through the second hot-pressing assembly, which not only can prolong the service life of the second flexible film, but also can ensure that each cell receives effective protection from the second flexible film, reducing the probability of indentation occurring on the second surface of the cell and the probability of adhesion between the cell and the second hot-pressing surface, thereby improving the consistency of the hot-pressing effect on multiple cells.

In some embodiments, the second adjustment assembly includes a second unwinding roller, a second tensioning roller, and a second winding roller sequentially disposed along the second direction, two ends of the second flexible film are respectively connected to the second unwinding roller and the second winding roller, and the second flexible film is also wound around the second tensioning roller.

With this arrangement, when it is necessary to adjust the contact position between the second flexible film and the second hot-pressing surface, the second winding roller can be driven to rotate, causing the second winding roller to pull and wind the second flexible film along a rotation direction of the second winding roller, thereby changing the corresponding contact position between the second flexible film and the second hot-pressing surface, so as to achieve the effect of adjusting the contact position between the second flexible film and the second hot-pressing surface.

According to a second aspect, embodiments of the present application provide a battery production device, where the battery production device includes the above-mentioned cell hot-pressing apparatus.

The battery production device according to the second aspect of the present application has at least the following beneficial effects:

The battery production device of embodiments of the present application, since it is configured with the above-mentioned cell hot-pressing apparatus, also has the same technical effects brought by the cell hot-pressing apparatus, that is, by arranging the first pressing plate and the second pressing plate on the first hot-pressing assembly as separate components and enabling the first pressing plate and the second pressing plate to alternately move up and down along the first direction, and at the same time, by arranging the third pressing plate and the fourth pressing plate on the second hot-pressing assembly as separate components and enabling the third pressing plate to move up and down along the first direction relative to the fourth pressing plate, the corresponding pressing plates can effectively avoid motion interference with the cell handling member during the cell feeding process, allowing the cell to be smoothly fed to a hot-pressing station, effectively improving the efficiency of feeding the cell to the hot-pressing station for hot-pressing and shaping, thereby improving the production efficiency of the cell and also improving the production efficiency of a battery.

The foregoing description is merely an overview of the technical solution of the present application. For a better understanding of the technical means in the present application such that they can be implemented according to the content of the specification, and to make the above and other objectives, features, and advantages of the present application more obvious and easier to understand, the following describes specific embodiments of the present application.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present application, and persons of ordinary skill in the art may still derive other drawings from the accompanying drawings without creative efforts. In the accompanying drawings:
FIG. 1 is a schematic structural diagram of a cell hot-pressing apparatus according to an embodiment of the present application.
FIG. 2 is a schematic structural diagram of a cell hot-pressing apparatus according to an embodiment of the present application from another perspective.
FIG. 3 is a schematic diagram one of a partial structural of a cell hot-pressing apparatus according to an embodiment of the present application.
FIG. 4 is a schematic structural diagram of a cell hot-pressing apparatus according to an embodiment of the present application in an initial state.
FIG. 5 is a schematic structural diagram of a cell hot-pressing apparatus cooperating with a cell according to an embodiment of the present application.

Reference signs: first hot-pressing assembly 100; first pressing plate 110; second pressing plate 120; first hot-pressing surface 130; first frame body 140; guide rail 150; first driving member 160; second hot-pressing assembly 200; third pressing plate 210; fourth pressing plate 220; second hot-pressing surface 230; second frame body 240; second driving member 250; first flexible film 300; first adjustment assembly 400; first unwinding roller 410; first tensioning roller 420; first winding roller 430; second flexible film 500; second adjustment assembly 600; second unwinding roller 610; second tensioning roller 620; second winding roller 630; cell 700; first surface 710; second surface 720; first direction X; and second direction Y.

### DESCRIPTION OF EMBODIMENTS

The following clearly and completely describes the technical solutions in some embodiments of the present application with reference to the accompanying drawings in some embodiments of the present application. Apparently, the described embodiments are only some but not all of the embodiments of the present application. All other embodiments obtained by persons of ordinary skill in the art based on the embodiments of the present application without creative efforts shall fall within the protection scope of the present application.

In the descriptions of the present application, it should be understood that if the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like present, the orientations or positional relationships indicated by these terms are based on the orientations or positional relationships shown in the accompanying drawings, are merely intended to facilitate the descriptions of the present application and simplify the descriptions, are not intended to indicate or imply that the apparatuses or components mentioned must have specific orientations, or be constructed and operated for a specific orientation, and therefore shall not be construed as a limitation to the present application.

In addition, if the terms "first" and "second" present, these terms are merely for the purpose of description, and shall not be understood as any indication or implication of relative importance or any implicit indication of the number of technical features indicated. Therefore, a feature limited by "first" or "second" may explicitly or implicitly include at least one feature. In the description of the present application, if the term "multiple" presents, the meaning of "multiple" is at least two, for example two or three, unless otherwise specifically stated.

In the present application, unless otherwise clearly specified and defined, if the terms "installation", "connecting", "connection", and "fixation" present, these terms should be understood in their general senses. For example, they may refer to a fixed connection, a detachable connection, or an integral connection, may refer to a mechanical connection or an electrical connection, and may refer to a direct connection, an indirect connection through an intermediary, an internal communication between two elements, or an interaction between two elements, unless otherwise clearly defined. Persons of ordinary skill in the art can understand specific meanings of these terms in the present application as suitable to specific situations.

In the present application, unless otherwise clearly specified and defined, if there is a description similar to a first feature being "on" or "under" a second feature, its meaning may be that the first and second features are in direct contact, or the first and second features are indirectly contacted through an intermediary. Moreover, that the first feature is "above", "over", and "on" the second feature may mean that the first feature is directly above or obliquely above the second feature or simply mean that the first feature has a higher level than the second feature. That the first feature is "under", "below", or "beneath" the second feature means that the first feature is directly or obliquely below the second feature, or only means that the first feature is lower than the second feature in the horizontal direction.

It should be noted that if a component is referred to as being "fastened to" or "disposed on" another component, it may be directly fastened to the another component, or there may be a component in between. If a component is deemed as being "connected to" another component, it may be directly connected to the another component, or there may be a component in between. If presents, the terms "vertical", "horizontal", "upper", "lower", "left", "right", and other similar expressions as used in the present application are for illustration only, and are not intended to represent the only embodiment.

Currently, from the perspective of market development, application of batteries is being more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of batteries, market demands for traction batteries are also increasing.

A battery is composed of one or more battery cells. For each battery composed of the multiple battery cells, the multiple battery cells can be connected in series, in parallel, or series-parallel, where being connected in series-parallel means a combination of series and parallel connections of the plurality of battery cells.

A battery cell is the smallest unit that constitutes the battery, and the structure of the battery cell includes a housing, an electrolyte, and an electrode assembly. The electrode assembly is a component in the battery cell where electrochemical reaction occurs. The electrode assembly includes a positive electrode sheet, a negative electrode sheet, and a separator. The housing may include one or more electrode assemblies, and the electrode assembly is mainly formed by winding or stacking the positive electrode sheet and the negative electrode sheet, and a separator is generally disposed between the positive electrode sheet and the negative electrode sheet.

The housing is a structure with an opening at one end and hollow interior. The electrode assembly is disposed inside the housing, and an end cover is covered at the opening of the housing. The end cover covers the opening to form the internal environment of the battery cell. Certainly, the end cover and the housing may also be integrated. Specifically, the end cover and the housing may first form a common connection surface before other components enter the housing, and when it is necessary to seal the inside of the housing, the end cover is covered on the housing. The housing may be of various shapes and sizes, such as a cuboid shape, a cylindrical shape, and a hexagonal prism shape. Specifically, the shape of the housing can be determined according to the specific shape and size of the electrode assembly. The material of the housing may be various, such as copper, iron, aluminum, stainless steel, aluminum alloy, and plastic. This is not particularly limited in the embodiments of the present application.

In a battery production process, a positive electrode sheet, a negative electrode sheet, and a separator are processed by winding or stacking to form an electrode assembly, where the electrode assembly may also be called a cell here, and then the cell needs to be hot-pressed and shaped to meet quality requirements of the cell.

When hot-pressing and shaping the cell, a handling member is generally used to transport the cell to a hot-pressing station, and after a hot-pressing plate completely fits and positions the cell at the hot-pressing station, the feeding of the cell is completed.

In order to reduce the probability of relative slippage and misalignment of multiple electrode sheets on the cell caused by the handling member directly abutting and placing the cell on the hot-pressing plate, the handling member needs to maintain a fixing action on the cell before the hot-pressing plate positions and fits a surface of the cell. However, due to the structural limitations of the existing hot-pressing apparatus, when the hot-pressing positions and fits the surface of the cell, structural interference with the handling member occurs, making it difficult for the hot-pressing plate to position and fit the surface of the cell, causing difficulties in cell feeding and affecting the hot-pressing efficiency of the cell.

Based on this, in response to the problem of difficulties in cell feeding and affecting the hot-pressing efficiency of the cell due to the hot-pressing plate on the current hot-pressing apparatus being prone to structural interference with the cell, one or more embodiments of the present application provide a cell hot-pressing apparatus. By arranging the first pressing plate and the second pressing plate on the first hot-pressing assembly as separate components and enabling the first pressing plate and the second pressing plate to alternately move up and down along the first direction, and at the same time, by arranging the third pressing plate and the fourth pressing plate on the second hot-pressing assembly as separate components and enabling the third pressing plate to move up and down along the first direction relative to the fourth pressing plate, the corresponding pressing plates can effectively avoid motion interference with a cell handling member during the cell feeding process, allowing the cell to be smoothly fed to the hot-pressing station, effectively improving the efficiency of feeding the cell to the hot-pressing station for hot-pressing and shaping, thereby improving the production efficiency of the cell.

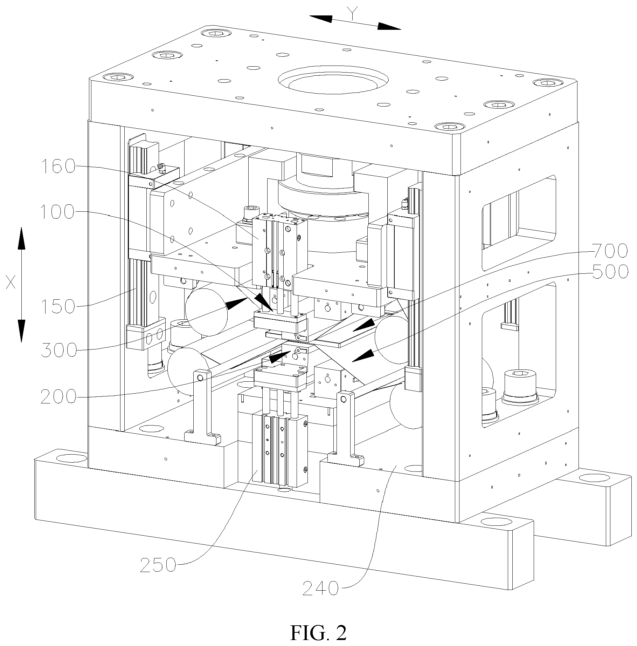

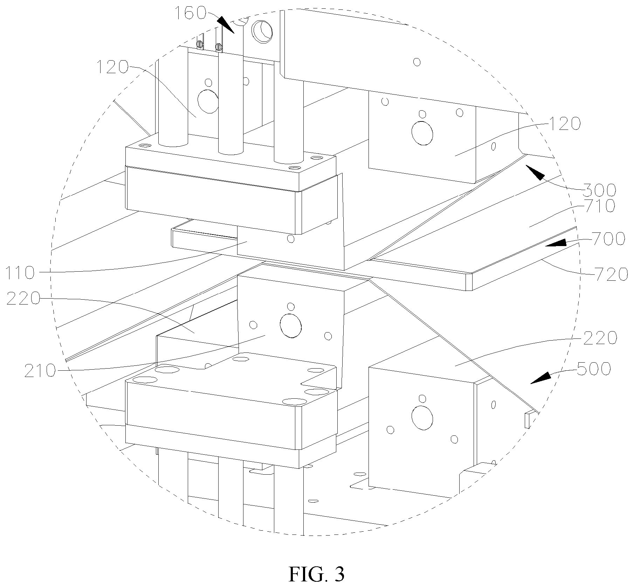

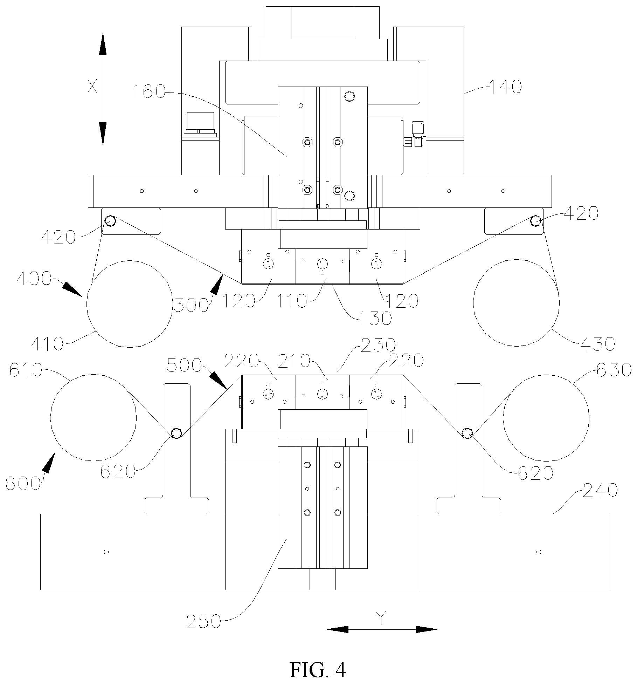

Referring to FIGs. 1, 2, 3, and 4, FIG. 1 is a schematic structural diagram of the overall structure of a cell hot-pressing apparatus according to an embodiment of the present application, FIG. 2 is a schematic structural diagram of the overall structure of a cell hot-pressing apparatus according to an embodiment of the present application from another perspective, FIG. 3 is a schematic view of a matching structure of a cell hot-pressing apparatus and a cell during cell feeding according to an embodiment of the present application, and FIG. 4 is a schematic structural diagram of a cell hot-pressing apparatus according to an embodiment of the present application in an initial state. In FIG. 4, the cell has not yet entered the cell hot-pressing apparatus.

Embodiments of the present application provide a cell hot-pressing apparatus, where the cell hot-pressing apparatus includes a first hot-pressing assembly 100 and a second hot-pressing assembly 200.

The first hot-pressing assembly 100 includes a first pressing plate 110 and a second pressing plate 120 disposed adjacent to the first pressing plate 110, where the first pressing plate 110 and the second pressing plate 120 are joined to form a first hot-pressing surface 130 for pressing against and covering at least a portion of a first surface 710 of a cell 700, and the first pressing plate 110 and the second pressing plate 120 are capable of alternately moving up and down along a first direction X.

The second hot-pressing assembly 200 is disposed opposite to the first hot-pressing assembly 100 along the first direction X, and the second hot-pressing assembly 200 includes a third pressing plate 210 and a fourth pressing plate 220 disposed adjacent to the third pressing plate 210, where the third pressing plate 210 and the fourth pressing plate 220 are joined to form a second hot-pressing surface 230 for pressing against and covering at least a portion of a second surface 720 of the cell 700, and the third pressing plate 210 is capable of moving up and down along the first direction X relative to the fourth pressing plate 220.

It should be noted that, referring to FIGs. 2, 3 and 4, in the present application, the first direction X can be understood as an up-down direction of the cell hot-pressing apparatus, that is, a height direction thereof. The first surface 710 and the second surface 720 of the cell 700 are two opposite large surfaces of the cell 700, that is, an upper surface and a lower surface of the cell 700, respectively.

In the present application, the first pressing plate 110 and the second pressing plate 120 on the first hot-pressing assembly 100 may be, but are not limited to, rectangular plates, circular plates, or the like, and the specific shape is not limited and may be adaptively designed according to the shape of the cell 700 to be hot-pressed.

In the first hot-pressing assembly 100, the first pressing plate 110 may be connected to a driving end of a first driving member 160, and the first driving member 160 may be, but is not limited to, a linear cylinder, a ball screw mechanism, or other direct drive structures. It can be understood that the up-down movement of the first pressing plate 110 along the first direction X is driven by the first driving member 160.

In addition, the first hot-pressing assembly 100 may be entirely connected to an output end of a press (not shown in the figure), or the second pressing plate 120 may be connected to the output end of the press, so that the up-down movement of the first pressing plate 110 in the first direction X and the up-down movement of the second pressing plate 120 in the first direction X can be driven by different driving members, enabling the first pressing plate 110 and the second pressing plate 120 to alternately move up and down along the first direction X. For example, the entire first hot-pressing assembly 100 is connected to the output end of the press, and the press drives the entire first hot-pressing assembly 100 to move up and down along the first direction X.

It is easy to understand that, referring to FIG. 4, in the initial state of the cell hot-pressing apparatus according to the embodiment of the present application, the first pressing plate 110 and the second pressing plate 120 on the first hot-pressing assembly 100 remain flush with each other. At this time, the first pressing plate 110 and the second pressing plate 120 are joined together as a whole to form the first hot-pressing surface 130, and the first hot-pressing surface 130 can cover part or all of the first surface 710 of the cell 700.

In the second hot-pressing assembly 200, the third pressing plate 210 and the fourth pressing plate 220 may be, but are not limited to, rectangular plates, circular plates, or the like, and the specific shape is not limited and may also be adaptively designed according to the shape of the cell 700 to be hot-pressed.

In the second hot-pressing assembly 200, the third pressing plate 210 may be connected to an output end of a second driving member 250, and the second driving member 250 may be, but is not limited to, a linear cylinder, a ball screw mechanism, or other linear drive structures. The up-down movement of the third pressing plate 210 along the first direction X is driven by the second driving member 250.

It is easy to understand that, referring to FIG. 4, in the initial state of the cell hot-pressing apparatus according to the embodiment of the present application, the third pressing plate 210 and the fourth pressing plate 220 on the second hot-pressing assembly 200 remain flush with each other. At this time, the third pressing plate 210 and the fourth pressing plate 220 are joined together as a whole to form the second hot-pressing surface 230, and the second hot-pressing surface 230 can cover part or all of the second surface 720 of the cell 700.

It can be understood that, referring to FIG. 4, in the initial state of the cell hot-pressing apparatus according to the embodiment of the present application, a gap space for feeding the cell 700 is formed between the first hot-pressing assembly 100 and the second hot-pressing assembly 200.

Referring to FIGs. 3, 4, and 5, when a handling member (not shown in the figure, such as a clamp or a robot arm) transports the cell 700 to be hot-pressed into the gap space between the first hot-pressing assembly 100 and the second hot-pressing assembly 200, the position of the first pressing plate 110 corresponding to the cell 700 in the first direction X and a contact position between the handling member and the cell 700 are staggered from each other, and similarly, the position of the third pressing plate 210 corresponding to the cell 700 in the first direction X and a contact position between the handling member and the cell 700 are staggered from each other.

Then, the first pressing plate 110 moves down along the first direction X to fit on a partial surface of the first surface 710 of the cell 700, and at the same time, the third pressing plate 210 moves up along the first direction X to fit on a partial surface of the second surface 720 of the cell 700. At this time, the first pressing plate 110 and the third pressing plate 210 clamp and fix the cell 700 in the gap space, and the handling member then freely disengages from the cell 700, so that the cell 700 is fixed only under the clamping action of the first pressing plate 110 and the third pressing plate 210.

Then, the entire first hot-pressing assembly 100 drives the first pressing plate 110 and the second pressing plate 120 to move down along the first direction X. During this process, the first pressing plate 110 and the third pressing plate 210 maintain the clamping and fixing state on the cell 700, and at the same time, the first pressing plate 110 pushes the third pressing plate 210 to move down and reset to the initial position flush with the fourth pressing plate 220. The second hot-pressing surface 230 formed by joining the third pressing plate 210 and the fourth pressing plate 220 not only positions and fits the second surface 720 of the cell 700, but also can serve as a support surface for the first hot-pressing assembly 100 to continue pressing down, thereby moving the first pressing plate 110 and the second pressing plate 120 to a state flush with each other, so that the first hot-pressing surface 130 formed by joining the first pressing plate 110 and the second pressing plate 120 positions and fits on the first surface 710 of the cell 700, thus completely clamping and fixing the cell 700 between the first hot-pressing surface 130 and the second hot-pressing surface 230, completing the feeding of the cell 700 for subsequent hot-pressing and shaping of the cell 700.

It is not difficult to understand that the cell hot-pressing apparatus according to the embodiment of the present application, by arranging the first pressing plate 110 and the second pressing plate 120 on the first hot-pressing assembly 100 as separate components and enabling the first pressing plate 110 and the second pressing plate 120 to alternately move up and down along the first direction X, and at the same time, by arranging the third pressing plate 210 and the fourth pressing plate 220 on the second hot-pressing assembly 200 as separate components and enabling the third pressing plate 210 to move up and down along the first direction X relative to the fourth pressing plate 220, can enable the corresponding pressing plates to effectively avoid motion interference with the cell handling member during the feeding process of the cell 700, allowing the cell 700 to be smoothly fed to a hot-pressing station, effectively improving the efficiency of feeding the cell 700 to the hot-pressing station for hot-pressing and shaping, thereby improving the production efficiency of the cell.

Certainly, when it is necessary to discharge the cell 700 after completing the hot-pressing and shaping, the actions of the first hot-pressing assembly 100 and the second hot-pressing assembly 200 can be opposite to the actions performed during the feeding process of the cell 700, which can also avoid motion interference with the handling member, facilitating the discharge of the cell 700.

Referring to FIGs. 3, 4, and 5, in some embodiments of the present application, two second pressing plates 120 are provided, the two second pressing plates 120 are respectively disposed on two opposite sides of the first pressing plate 110, and the first hot-pressing surface 130 formed by joining the first pressing plate 110 and the two second pressing plates 120 covers the first surface 710 of the cell 700.

In some examples, the two second pressing plates 120 are respectively disposed on two opposite sides of the first pressing plate 110 along a second direction Y, and the second direction Y is a left-right direction of the cell hot-pressing apparatus, that is, a length direction thereof.

Referring to FIG. 4, when the cell hot-pressing apparatus is in the initial state, the first pressing plate 110 and the two second pressing plates 120 are flush with each other, and a vertical projection of the first hot-pressing surface 130 formed by joining the three plates covers all of the first surface 710 of the cell 700 located therebelow.

With this arrangement, on the one hand, when the handling member transfers the cell 700 to be hot-pressed into the gap space between the first hot-pressing assembly 100 and the second hot-pressing assembly 200, the first pressing plate 110 corresponds to a middle position of the first surface 710 of the cell 700 in the first direction X, and is staggered from the handling members on two sides of the cell 700, so that when the first pressing plate 110 is individually pressed down to the cell 700 relative to the second pressing plates 120 on its two sides, motion interference with the handling member on the cell 700 can be smoothly avoided, further improving the feeding efficiency of the cell 700.

On the other hand, the first hot-pressing surface 130 formed by joining the first pressing plate 110 and the two second pressing plates 120 can completely cover the first surface 710 of the cell 700, so that each part on the first surface 710 of the cell 700 can be hot-pressed and shaped, improving the uniformity of hot-pressing on the cell 700, thereby improving the hot-pressing efficiency of the cell 700.

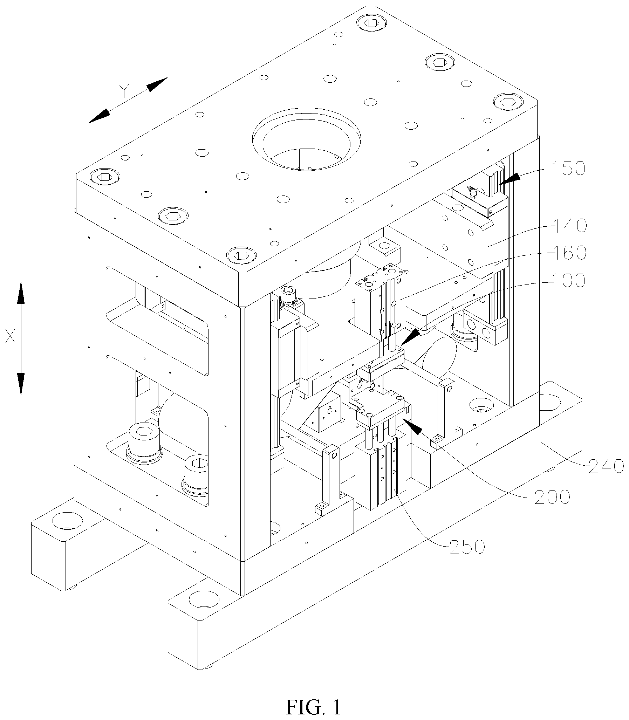

Further, referring to FIGs. 1 and 2, the first hot-pressing assembly 100 further includes a first frame body 140, all the second pressing plates 120 are connected to the first frame body 140 to be driven by the first frame body 140 to move up and down along the first direction X, and the first pressing plate 110 is also movably connected to the first frame body 140 in an up-down manner.

In some examples, all the second pressing plates 120 are connected to the first frame body 140 through a first bottom plate (not shown in the figure), the first driving member 160 is mounted on the first frame body 140, an output end of the first driving member 160 is connected to the first pressing plate 110, the first bottom plate is provided with a first avoidance opening (not shown in the figure) for the extension and retraction of the output end of the first driving member 160, and the first frame body 140 is connected to the output end of a press (not shown in the figure). With this arrangement, the entire first hot-pressing assembly 100 is driven by the press to move up and down along the first direction X, and the first pressing plate 110 is driven by the first driving member 160 to move up and down independently along the first direction X.

It is not difficult to understand that by connecting all the second pressing plates 120 to the first frame body 140, all the second pressing plates 120 can be synchronously moved up and down with the first frame body 140, eliminating the need to configure separate driving members for each second pressing plate 120, saving material costs. In addition, the first frame body 140 can serve as an installation support structure for the first pressing plate 110, facilitating independent up-down movements of the first pressing plate 110 relative to the second pressing plate 120.

Further, still referring to FIGs. 1 and 2, the first hot-pressing assembly 100 further includes a guide rail 150 extending along the first direction X, and the first frame body 140 is slidably mounted on the guide rail 150.

In some examples, two guide rails 150 are provided, the two guide rails 150 are respectively disposed on two opposite sides of the first frame body 140 along the second direction Y, and the first frame body 140 is slidably mounted on the guide rails 150 on two sides through sliders.

With this arrangement, the first frame body 140 can drive the first pressing plate 110 and the second pressing plate 120 thereon to move up and down in the first direction X with improved linearity, so that the first hot-pressing surface 130 formed by joining the first pressing plate 110 and the second pressing plate 120 accurately positions and fits on the first surface 710 of the cell 700, reducing the probability of structural interference between the first pressing plate 110 and/or the second pressing plate 120 and the handling member.

Still referring to FIGs. 3 and 4, in some embodiments of the present application, two fourth pressing plates 220 are provided, the two fourth pressing plates 220 are respectively disposed on two opposite sides of the third pressing plate 210, and the second hot-pressing surface 230 formed by joining the third pressing plate 210 and the two fourth pressing plates 220 covers the second surface 720 of the cell 700.

Similarly, the two fourth pressing plates 220 are respectively disposed on two opposite sides of the third pressing plate 210 along the second direction Y. When the cell hot-pressing apparatus is in the initial state, the third pressing plate 210 and the two fourth pressing plates 220 are flush with each other, and a vertical projection of the second hot-pressing surface 230 formed by joining the three plates covers all of the second surface 720 of the cell 700 located thereabove.

With this arrangement, on the one hand, when the handling member transfers the cell 700 to be hot-pressed into the gap space between the first hot-pressing assembly 100 and the second hot-pressing assembly 200, the third pressing plate 210 corresponds to a middle position of the second surface 720 of the cell 700 in the first direction X and is staggered from the handling members on two sides of the cell 700, so that when the third pressing plate 210 is individually pressed up to the cell 700 relative to the fourth pressing plates 220 on its two sides, motion interference with the handling member on the cell 700 can be smoothly avoided, further improving the feeding efficiency of the cell 700.

On the other hand, the second hot-pressing surface 230 formed by joining the third pressing plate 210 and the two fourth pressing plates 220 can completely cover the second surface 720 of the cell 700, so that each part on the second surface 720 of the cell 700 can be hot-pressed and shaped, improving the uniformity of hot-pressing on the cell 700, thereby improving the hot-pressing efficiency of the cell 700.

Further, referring to FIGs. 1 and 2, the second hot-pressing assembly 200 further includes a second frame body 240, all the fourth pressing plates 220 are fixedly disposed on the second frame body 240, and the third pressing plate 210 is also movably connected to the second frame body 240 in an up-down manner.

In some examples, all the fourth pressing plates 220 are connected to the second frame body 240 through a second bottom plate (not shown in the figure), the second driving member 250 is mounted on the second frame body 240, an output end of the second driving member 250 is connected to the third pressing plate 210, and the second bottom plate is provided with a second avoidance opening (not shown in the figure) for the extension and retraction of the output end of the second driving member 250. With this arrangement, the second driving member 250 drives the third pressing plate 210 to move up relative to the fourth pressing plate 220, and at the same time, the third pressing plate 210 and the output end of the second driving member 250 can also reset to the initial position under the pressing down force of the first pressing plate 110, so that the second hot-pressing surface 230 formed by joining the third pressing plate 210 and the fourth pressing plate 220 presses against and covers the second surface 720 of the cell 700.

It can be understood that the second frame body 240 serves as an installation support structure for the third pressing plate 210 and all the fourth pressing plates 220, facilitating the spatial layout and installation of the third pressing plate 210 and the fourth pressing plate 220. Moreover, the second frame body 240 can serve as a bearing support structure for the entire first hot-pressing assembly 100 and the cell 700, providing support for subsequent pressing and shaping of the cell 700.

Referring to FIGs. 3, 4 and 5, in some embodiments of the present application, the cell hot-pressing apparatus further includes a first flexible film 300 stretched between the first hot-pressing assembly 100 and the cell 700 along the second direction Y, the second direction Y intersects the first direction X, and after the first pressing plate 110 and the second pressing plate 120 move down a preset distance relative to the first direction X, at least a portion of the first flexible film 300 is pressed against and covered on the first surface 710 of the cell 700.

In some examples, the first flexible film 300 is configured as a Teflon anti-stick film, which has good high temperature resistance and thermal conductivity, and also has a relatively smooth surface.

It can be understood that after the cell 700 completes feeding, the cell 700 is clamped and fixed between the first hot-pressing surface 130 and the second hot-pressing surface 230, and at the same time, the first flexible film 300 is pressed against by the first hot-pressing surface 130 and covered on the first surface 710 of the cell 700.

With this arrangement, on the one hand, by means of the protective effect of the smooth first flexible film 300 on the first surface 710 of the cell 700, the first hot-pressing surface 130 formed by joining the first pressing plate 110 and the second pressing plate 120 does not directly contact the first surface 710 of the cell 700, which can effectively reduce the probability of indentation occurring on the first surface 710 of the cell 700. On the other hand, by means of the structural characteristics of the first flexible film 300, the probability of adhesion between the first surface 710 of the cell 700 and the first pressing plate 110 and/or the second pressing plate 120 after hot-pressing of the cell 700 can be reduced. In this way, the hot-pressing quality and hot-pressing efficiency of the cell 700 are improved.

It should be noted that during the hot-pressing process of batch cells 700 by the cell hot-pressing apparatus, a contact position between the first flexible film 300 and the first hot-pressing surface 130 or the first surface 710 of the cell 700 remains the same, and after long-term use, the structural strength at the contact position between the first flexible film 300 and the first hot-pressing surface 130 experiences significant wear, reducing the protective effect of the first flexible film 300 on the cell 700.

Based on this, in some embodiments, referring to FIGs. 3 and 4, the cell hot-pressing apparatus further includes a first adjustment assembly 400, and the first adjustment assembly 400 is configured to guide the first flexible film 300 to move along a preset direction to adjust the contact position between the first flexible film 300 and the first hot-pressing surface 130.

In some examples, the preset direction may be a straight line or a winding curve, which is not specifically limited.

It is not difficult to understand that when it is necessary to adjust the contact position between the first flexible film 300 and the first hot-pressing surface 130, the adjustment can be performed when the cell hot-pressing apparatus is in the initial state, at which time the first flexible film 300 does not contact the surface of the cell 700 and/or the first hot-pressing surface 130.

The corresponding contact position between the first flexible film 300 and the first hot-pressing surface 130 is changed by guiding the first flexible film 300 to move along the preset direction through the first adjustment assembly 400, which not only can prolong the service life of the first flexible film 300, but also can ensure that each cell 700 receives effective protection from the first flexible film 300, reducing the probability of indentation occurring on the first surface 710 of the cell 700 and the probability of adhesion between the cell 700 and the first hot-pressing surface, thereby improving the consistency of the hot-pressing effect on multiple cells 700.

Further, referring to FIGs. 3 and 4, the first adjustment assembly 400 includes a first unwinding roller 410, a first tensioning roller 420, and a first winding roller 430 sequentially disposed along the second direction Y, two ends of the first flexible film 300 are respectively connected to the first unwinding roller 410 and the first winding roller 430, and the first flexible film 300 is also wound around the first tensioning roller 420.

In some examples, two first tensioning rollers 420 are provided and are respectively mounted on two opposite sides of the first frame body 140, and the first unwinding roller 410 and the first winding roller 430 are also respectively mounted on two opposite sides of the first frame body 140.

When the first pressing plate 110 independently moves down relative to the second pressing plate 120 along the first direction X, the bottom surface of the first pressing plate 110 first contacts the first flexible film 300 and causes the first flexible film 300 to partially deform downward. During the process where the first frame body 140 drives the first pressing plate 110 and the second pressing plate 120 thereon to move down to the position of the fourth pressing plate 220, the first adjustment assembly 400 composed of the first unwinding roller 410, the first tensioning roller 420, and the first winding roller 430 synchronously moves down with the first frame body 140. With this arrangement, the first flexible film 300 is subjected to a small tensile external force from the first pressing plate 110, effectively reducing the probability of the first flexible film 300 being excessively stretched and deformed by the first pressing plate 110 and thus breaking.

It should also be noted that when it is necessary to adjust the contact position between the first flexible film 300 and the first hot-pressing surface 130, the first winding roller 430 can be driven to rotate, causing the first winding roller 430 to pull and wind the first flexible film 300 along a rotation direction of the first winding roller 430, thereby changing the corresponding contact position between the first flexible film 300 and the first hot-pressing surface 130, so as to achieve the effect of adjusting the contact position between the first flexible film 300 and the first hot-pressing surface 130.

In addition, a damper can be provided on the first unwinding roller 410 to lock or unlock the first flexible film 300, which is conducive to accurately adjusting the contact position between the first flexible film 300 and the first hot-pressing surface 130 and achieving maximum utilization of the first flexible film 300.

Referring to FIGs. 3, 4 and 5, in some embodiments of the present application, the cell hot-pressing apparatus further includes a second flexible film 500 stretched between the second hot-pressing assembly 200 and the cell 700 along the second direction Y, the second direction Y intersects the first direction X, and after the first pressing plate 110 and the second pressing plate 120 move down a preset distance relative to the first direction X, the cell 700 is pressed between the first hot-pressing surface 130 and the second hot-pressing surface 230, so that at least a portion of the second flexible film 500 is pressed against and covered on the second surface 720 of the cell 700.

Similarly, the second flexible film 500 is configured as a Teflon anti-stick film, which has good high temperature resistance and thermal conductivity, and also has a relatively smooth surface.

It can be understood that after the cell 700 completes feeding, the cell 700 is clamped and fixed between the first hot-pressing surface 130 and the second hot-pressing surface 230, and at the same time, the second flexible film 500 is pressed against by the second hot-pressing surface 230 and covered on the second surface 720 of the cell 700.

With this arrangement, on the one hand, by means of the protective effect of the smooth second flexible film 500 on the second surface 720 of the cell 700, the second hot-pressing surface 230 formed by joining the third pressing plate 210 and the fourth pressing plate 220 does not directly contact the second surface 720 of the cell 700, which can effectively reduce the probability of indentation occurring on the second surface 720 of the cell 700. On the other hand, by means of the structural characteristics of the second flexible film 500, the probability of adhesion between the second surface 720 of the cell 700 and the third pressing plate 210 and/or the fourth pressing plate 220 after hot-pressing of the cell 700 can be reduced. In this way, the hot-pressing quality and hot-pressing efficiency of the cell 700 are improved.

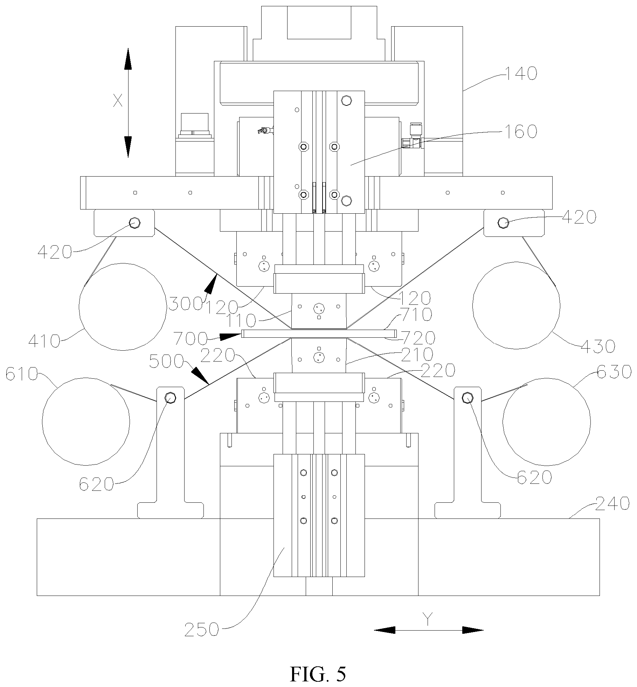

Further, referring to FIGs. 4 and 5, the cell hot-pressing apparatus further includes a second adjustment assembly 600, and the second adjustment assembly 600 is configured to guide the second flexible film 500 to move along a preset direction to adjust a contact position between the second flexible film 500 and the second hot-pressing surface 230.

In some examples, the preset direction may be a straight line or a winding curve, which is not specifically limited.

It is not difficult to understand that when it is necessary to adjust the contact position between the second flexible film 500 and the second hot-pressing surface 230, the adjustment can be performed when the cell hot-pressing apparatus is in the initial state, at which time the second flexible film 500 does not contact the surface of the cell 700 and/or the second hot-pressing surface 230.

The corresponding contact position between the second flexible film 500 and the second hot-pressing surface 230 is changed by guiding the second flexible film 500 to move along the preset direction through the second hot-pressing assembly 200, which not only can prolong the service life of the second flexible film 500, but also can ensure that each cell 700 receives effective protection from the second flexible film 500, reducing the probability of indentation occurring on the second surface 720 of the cell 700 and the probability of adhesion between the cell 700 and the second hot-pressing surface 230, thereby improving the consistency of the hot-pressing effect on multiple cells 700.

Further, referring to FIGs. 4 and 5, the second adjustment assembly 600 includes a second unwinding roller 610, a second tensioning roller 620, and a second winding roller 630 sequentially disposed along the second direction Y, two ends of the second flexible film 500 are respectively connected to the second unwinding roller 610 and the second winding roller 630, and the second flexible film 500 is also wound around the second tensioning roller 620.

In some examples, two second tensioning rollers 620 are provided and are respectively mounted on two opposite sides of the second frame body 240, and the second unwinding roller 610 and the second winding roller 630 are also respectively mounted on two opposite sides of the second frame body 240.

When the third pressing plate 210 independently moves up relative to the fourth pressing plate 220 along the first direction X, the top surface of the third pressing plate 210 first contacts the second flexible film 500 and causes the second flexible film 500 to partially deform upward. When the first pressing plate 110 and the second pressing plate 120 move down to a position flush with the fourth pressing plate 220, the second flexible film 500 is synchronously driven to move to the initial position and restore the deformation.

It is not difficult to understand that when it is necessary to adjust the contact position between the second flexible film 500 and the second hot-pressing surface 230, the second winding roller 630 can be driven to rotate, causing the second winding roller 630 to pull and wind the second flexible film 500 along a rotation direction of the second winding roller 630, thereby changing the corresponding contact position between the second flexible film 500 and the second hot-pressing surface 230, so as to achieve the effect of adjusting the contact position between the second flexible film 500 and the second hot-pressing surface 230.

In addition, a damper can be provided on the second unwinding roller 610 to lock or unlock the second flexible film 500, which is conducive to accurately adjusting the contact position of the second flexible film 500 corresponding to the second hot-pressing surface 230 and achieving maximum utilization of the second flexible film 500.

In addition, embodiments of the present application also provide a battery production device, where the battery production device includes the cell hot-pressing apparatus of any of the above embodiments.

The battery production device of the embodiment of the present application, since it is configured with the above-mentioned cell hot-pressing apparatus, also has the same technical effects brought by the cell hot-pressing apparatus, that is, by arranging the first pressing plate and the second pressing plate on the first hot-pressing assembly as separate components and enabling the first pressing plate and the second pressing plate to alternately move up and down along the first direction, and at the same time, by arranging the third pressing plate and the fourth pressing plate on the second hot-pressing assembly as separate components and enabling the third pressing plate to move up and down along the first direction relative to the fourth pressing plate, the corresponding pressing plates can effectively avoid motion interference with the cell handling member during the cell feeding process, allowing the cell to be smoothly fed to a hot-pressing station, effectively improving the efficiency of feeding the cell to the hot-pressing station for hot-pressing and shaping, thereby improving the production efficiency of the cell and also improving the production efficiency of a battery.

Referring to FIGs. 1 to 5, in some embodiments of the present application, a cell hot-pressing apparatus and a battery production device are provided. The cell hot-pressing apparatus includes a first hot-pressing assembly 100 and a second hot-pressing assembly 200. The first hot-pressing assembly 100 includes a first pressing plate 110 and a second pressing plate 120 disposed adjacent to the first pressing plate 110, where the first pressing plate 110 and the second pressing plate 120 are joined to form a first hot-pressing surface 130 for pressing against and covering at least a portion of a first surface 710 of a cell 700, and the first pressing plate 110 and the second pressing plate 120 are capable of alternately moving up and down along a first direction X. The second hot-pressing assembly 200 is disposed opposite to the first hot-pressing assembly 100 along the first direction X, and the second hot-pressing assembly 200 includes a third pressing plate 210 and a fourth pressing plate 220 disposed adjacent to the third pressing plate 210, where the third pressing plate 210 and the fourth pressing plate 220 are joined to form a second hot-pressing surface 230 for pressing against and covering at least a portion of a second surface 720 of the cell 700, and the third pressing plate 210 is capable of moving up and down along the first direction X relative to the fourth pressing plate 220.

The battery production device includes the above-mentioned cell hot-pressing apparatus.

The cell hot-pressing apparatus and the battery production device of the embodiment of the present application, by arranging the first pressing plate 110 and the second pressing plate 120 on the first hot-pressing assembly 100 as separate components and enabling the first pressing plate 110 and the second pressing plate 120 to alternately move up and down along the first direction X, and at the same time, by arranging the third pressing plate 210 and the fourth pressing plate 220 on the second hot-pressing assembly 200 as separate components and enabling the third pressing plate 210 to move up and down along the first direction X relative to the fourth pressing plate 220, can enable the corresponding pressing plates to effectively avoid motion interference with a cell handling member during the feeding process of the cell 700, allowing the cell 700 to be smoothly fed to a hot-pressing station, effectively improving the efficiency of feeding the cell 700 to the hot-pressing station for hot-pressing and shaping, thereby improving the production efficiency of the cell and the corresponding battery.

Technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The foregoing embodiments show merely several implementations of the present application, and descriptions thereof are specific and detailed, but should not be construed as any limitation on the patent scope of the present application. It should be noted that those of ordinary skill in the art can further make several modifications and improvements without departing from the concept of the present application, and these modifications and improvements also fall within the protection scope of the present application. Therefore, the protection scope of the patent of the present application should be subject to the appended claims.

## Claims

1. A cell hot-pressing apparatus, comprising:
a first hot-pressing assembly, comprising a first pressing plate and a second pressing plate disposed adjacent to the first pressing plate, wherein the first pressing plate and the second pressing plate are joined to form a first hot-pressing surface for pressing against and covering at least a portion of a first surface of a cell, and the first pressing plate and the second pressing plate are capable of alternately moving up and down along a first direction; and
a second hot-pressing assembly, disposed opposite to the first hot-pressing assembly along the first direction, and comprising a third pressing plate and a fourth pressing plate disposed adjacent to the third pressing plate, wherein the third pressing plate and the fourth pressing plate are joined to form a second hot-pressing surface for pressing against and covering at least a portion of a second surface of the cell, and the third pressing plate is capable of moving up and down along the first direction relative to the fourth pressing plate.

2. The cell hot-pressing apparatus according to claim 1, wherein two second pressing plates are provided, the two second pressing plates are respectively disposed on two opposite sides of the first pressing plate, and the first hot-pressing surface formed by joining the first pressing plate and the two second pressing plates covers the first surface of the cell.

3. The cell hot-pressing apparatus according to claim 2, wherein the first hot-pressing assembly further comprises a first frame body, and all the second pressing plates are connected to the first frame body to be driven by the first frame body to move up and down along the first direction.

4. The cell hot-pressing apparatus according to claim 3, wherein the first pressing plate is also movably connected to the first frame body in an up-down manner.

5. The cell hot-pressing apparatus according to claim 3 or 4, wherein the first hot-pressing assembly further comprises a guide rail extending along the first direction, and the first frame body is slidably mounted on the guide rail.

6. The cell hot-pressing apparatus according to any one of claims 1 to 5, wherein two fourth pressing plates are provided, the two fourth pressing plates are respectively disposed on two opposite sides of the third pressing plate, and the second hot-pressing surface formed by joining the third pressing plate and the two fourth pressing plates covers the second surface of the cell.

7. The cell hot-pressing apparatus according to claim 6, wherein the second hot-pressing assembly further comprises a second frame body, and all the fourth pressing plates are fixedly disposed on the second frame body.

8. The cell hot-pressing apparatus according to claim 7, wherein the third pressing plate is also movably connected to the second frame body in an up-down manner.

9. The cell hot-pressing apparatus according to any one of claims 1 to 8, wherein the cell hot-pressing apparatus further comprises a first flexible film stretched between the first hot-pressing assembly and the cell along a second direction, the second direction intersects the first direction, and after the first pressing plate and the second pressing plate move down a preset distance relative to the first direction, at least a portion of the first flexible film is pressed against and covered on the first surface of the cell.

10. The cell hot-pressing apparatus according to claim 9, wherein the cell hot-pressing apparatus further comprises a first adjustment assembly, and the first adjustment assembly is configured to guide the first flexible film to move along a preset direction to adjust a contact position between the first flexible film and the first hot-pressing surface.

11. The cell hot-pressing apparatus according to claim 10, wherein the first adjustment assembly comprises a first unwinding roller, a first tensioning roller, and a first winding roller sequentially disposed along the second direction, two ends of the first flexible film are respectively connected to the first unwinding roller and the first winding roller, and the first flexible film is also wound around the first tensioning roller.

12. The cell hot-pressing apparatus according to any one of claims 1 to 11, wherein the cell hot-pressing apparatus further comprises a second flexible film stretched between the second hot-pressing assembly and the cell along the second direction, the second direction intersects the first direction, and after the first pressing plate and the second pressing plate move down a preset distance relative to the first direction, the cell is pressed between the first hot-pressing surface and the second hot-pressing surface, so that at least a portion of the second flexible film is pressed against and covered on the second surface of the cell.

13. The cell hot-pressing apparatus according to claim 12, wherein the cell hot-pressing apparatus further comprises a second adjustment assembly, and the second adjustment assembly is configured to guide the second flexible film to move along a preset direction to adjust a contact position between the second flexible film and the second hot-pressing surface.

14. The cell hot-pressing apparatus according to claim 13, wherein the second adjustment assembly comprises a second unwinding roller, a second tensioning roller, and a second winding roller sequentially disposed along the second direction, two ends of the second flexible film are respectively connected to the second unwinding roller and the second winding roller, and the second flexible film is also wound around the second tensioning roller.

15. A battery production device, wherein the battery production device comprises the cell hot-pressing apparatus according to any one of claims 1 to 14.
